# EUROPEAN PATENT APPLICATION

(11) **EP 3 021 213 A1**
(43) Date of publication of application: **18.05.2016**
(21) Application number: 15192023.8
(22) Date of filing: 29.10.2015
(51) Int. Cl.: G06F 3/14, G09G 5/00, G09G 5/02

(54) **DISPLAY APPARATUS AND DISPLAY METHODS THEREOF**

(30) Priority: 11.11.2014 KR 20140156158
(71) Applicant: Samsung Electronics Co., Ltd., Gyeonggi-do 16677 (KR)
(72) Inventor: CHOI, Hak-hun, Suwon-si (KR); LIM, Dae-sung, Suwon-si (KR); JEONG, Hae-joo, Seoul (KR)
(74) Representative: Appleyard Lees IP LLP

(57) **Abstract**

A display apparatus which constitutes a display system configured of a plurality of display apparatuses is provided. The display apparatus includes a communication unit configured to receive screen change parameters in which image information of partial images divided from one image is analyzed from one or more other display apparatuses, and a controller configured to calculate a screen change value using the received screen change parameters and control the communication unit to transmit the calculated screen change value to the one or more other display apparatuses. The image information is screen change information according to change in frames of the divided partial images.

## Description

### CROSS-REFERENCE TO RELATED APPLICATIONS

This application claims priority benefit from Korean Patent Application No. 10-2014-0156158, filed on November 11, 2014, in the Korean Intellectual Property Office, the disclosure of which is incorporated herein by reference in its entirety.

### BACKGROUND

### 1. Field

Apparatuses and methods consistent with exemplary embodiments relate to a display apparatus and a display method thereof, and more particularly, to a display apparatus and a display method thereof, which perform unified image-quality processing through a plurality of display apparatuses in a display system including the plurality of display apparatuses.

### 2. Description of the Related Art

Display systems configured of a plurality of display apparatuses are technology for representing a single image simultaneously using the plurality of display apparatuses for the purpose of advertising, entertainment, sports, broadcasting, and the like.

For example, the display systems configured of the plurality of display apparatuses may be used to simultaneously display the same image through the plurality of display apparatuses constituting the display system or to display different images through the plurality of display apparatuses in a form of combining the different images in one entire image in exhibitions and the like.

In recent years, the image quality may be improved using a variety of image-quality processing methods in display apparatuses. For example, the methods of improving image quality such as a method of improving sharpness, a method of improving contrast, and a motion-compensation processing method through generation of interpolated frames in a moving image may be used.

The display apparatuses may perform image-quality processing by analyzing a received image. In response to different images being displayed through a plurality of display apparatuses in a form to display an entire image by combining the different images in the one entire image in a display system configured of the plurality of display apparatuses, the display apparatuses may perform analysis only on partial images received therethrough. That is, since the display apparatuses may output images by separately performing image-quality processing, the one entire image in which the images displayed in the display apparatuses are combined may be lack of the sense of unity.

### SUMMARY

Exemplary embodiments may overcome the above disadvantages and other disadvantages not described above. Also, an exemplary embodiment is not required to overcome the disadvantages described above, and an exemplary embodiment may not overcome any of the problems described above.

One or more exemplary embodiments relate to a display apparatus and a display method thereof, which perform unified image-quality processing through a plurality of display apparatuses in a display system including the plurality of display apparatuses.

According to an aspect of an exemplary embodiment, there is provided a display apparatus which constitutes a display system configured of a plurality of display apparatuses, the display apparatus including a communication unit configured to receive screen change parameters in which image information of partial images divided from one image is analyzed from one or more other display apparatuses; and a controller configured to calculate a screen change value using the received screen change parameters and control the communication unit to transmit the calculated screen change value to the one or more other display apparatuses. The image information may be screen change information according to change in frames of the divided partial images.

The display apparatus may further include an image receiver configured to receive a partial image divided from the one image; and an image output unit configured to perform image-quality processing on the received partial image and output an image-quality-processed image. The controller may determine a screen change parameter of the display apparatus by analyzing image information of the received partial image and calculate the screen change value using the received screen change parameters and the determined screen change parameter. The image output unit may perform the image-quality processing on the received partial image using the screen change value to which the determined screen change parameter is reflected.

The screen change information may include at least one of motion information, fall back information, panning information, scroll information, and film information.

The screen change value may include at least one of a maximum value and a minimum value among the received screen change parameters, and an average value of the received screen change parameters.

According to an aspect of an exemplary embodiment, there is provided a display apparatus which constitutes a display system configured of a plurality of display apparatuses, the display apparatus including an image receiver configured to receive a partial image divided from one image; a controller configured to determine a screen change parameter by analyzing image information of the received partial image; a communication unit configured to transmit the determined screen change parameter to other display apparatus and receive a screen change value from the other display apparatus; and an image output unit configured to perform image-quality processing on the divided partial image using the received screen change value and output an image-quality-processed image. The image information may be screen change information according to change in a frame of the divided partial image.

The screen change information may include at least one of motion information, fall back information, panning information, scroll information, and film information.

The image output unit may output the image by converting a frame rate of the divided partial image using the received screen change value.

According to an aspect of an exemplary embodiment, there is provided a display method of a display apparatus which constitutes a display system configured of a plurality of display apparatuses, the method including receiving screen change parameters in which image information of partial images divided from one image is analyzed from one or more other display apparatuses; calculating a screen change value using the received screen change parameters; and transmitting the calculated screen change value to the one or more other display apparatuses. The image information may be screen change information according to change in frames of the divided partial images.

The method may further include receiving a partial image divided from the one image; determining a screen change parameter by analyzing image information of the received partial image; and performing image-quality processing on the received partial image and outputting an image-quality-processed image. The calculating of the screen change value may include calculating the screen change value using the received screen change parameters and the determined screen change parameter. The outputting may include performing the image-quality processing on the received partial image using the screen change value to which the determined screen change parameter is reflected.

The screen change information may include at least one of motion information, fall back information, panning information, scroll information, and film information.

The screen change value may include at least one of a maximum value and a minimum value among the received screen change parameters, and an average value of the received screen change parameters.

According to an aspect of an exemplary embodiment, there is provided a display method of a display apparatus which constitutes a display system configured of a plurality of display apparatuses, the method including receiving a partial image divided from one image; determining a screen change parameter by analyzing image information of the received partial image; transmitting the determined screen change parameter to other display apparatus and receiving a screen change value from the other display apparatus; and performing image-quality processing on the divided partial image using the received screen change value and output an image-quality-processed image. The image information may be screen change information according to change in a frame of the divided partial image.

The screen change information may include at least one of motion information, fall back information, panning information, scroll information, and film information.

The outputting may include outputting the image by converting a frame rate of the divided partial image using the received screen change value.

Additional aspects and advantages of the exemplary embodiments are set forth in the detailed description, and will be obvious from the detailed description, or may be learned by practicing the exemplary embodiments.

### BRIEF DESCRIPTION OF THE DRAWINGS

The above and/or other aspects of the present disclosure will be more apparent by describing certain exemplary embodiments of the present disclosure with reference to the accompanying drawings, in which:
FIG. 1 is a diagram illustrating a display system configured of a plurality of display apparatuses according to an exemplary embodiment;
FIG. 2 is a conceptual diagram illustrating a display system according to an exemplary embodiment;
FIG. 3 is a block diagram illustrating a configuration of a display apparatus operated as a master apparatus which constitutes a display system according to an exemplary embodiment;
FIG. 4 is a block diagram illustrating a configuration of a display apparatus operated as a slave apparatus which constitutes a display system according to an exemplary embodiment;
FIG. 5 is a block diagram illustrating a configuration of a display apparatus according to another exemplary embodiment;
FIGS. 6A and 6B are diagrams illustrating methods of determining a screen change parameter by analyzing screen change information according to an exemplary embodiment;
FIG. 7 is a diagram illustrating a method of converting a frame rate of a divided partial image using a screen change value according to an exemplary embodiment;
FIG. 8 is a flowchart illustrating a display method of a display apparatus operated as a master apparatus according to an exemplary embodiment;
FIG. 9 is a flowchart illustrating a display method of a display apparatus operated as a slave apparatus according to an exemplary embodiment; and
FIG. 10 is a sequence diagram illustrating a content display method of a display apparatus which constitutes a display system according to an exemplary embodiment.

### DETAILED DESCRIPTION

Exemplary embodiments are described herein with reference to cross-sectional illustrations that are schematic illustrations of exemplary embodiments (and intermediate structures). Thus, exemplary embodiments should not be construed as limited to the particular shapes of regions illustrated herein. These inventive concepts may, however, be embodied in different forms and it will be appreciated by those of ordinary skill in the art that changes may be made in these exemplary embodiments without departing from the principles and spirit of the inventive concept, the scope of which is defined by the claims and their equivalents. Also, well-known functions or constructions are not described in detail since they would obscure the disclosure with unnecessary detail.

It will be understood that, although the terms first, second, etc. may be used herein in reference to elements of the disclosure, such elements should not be construed as limited by these terms. The terms are used only to distinguish one element from other elements.

The terminology used herein to describe embodiments of the disclosure is not intended to limit the scope of the disclosure. The articles "a," "an," and "the" are singular in that they have a single referent; however, the use of the singular form in the present document should not preclude the presence of more than one referent. In other words, elements of the disclosure referred to in the singular may number one or more, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

In exemplary embodiments, "module" or "unit" may perform at least one function or operation, and may be implemented with hardware, software, or a combination thereof. "plurality of modules" or "plurality of units" may be implemented with at least one processor (not shown) through integration thereof with at least one module other than "module" or "unit" which needs to be implemented with specific hardware.

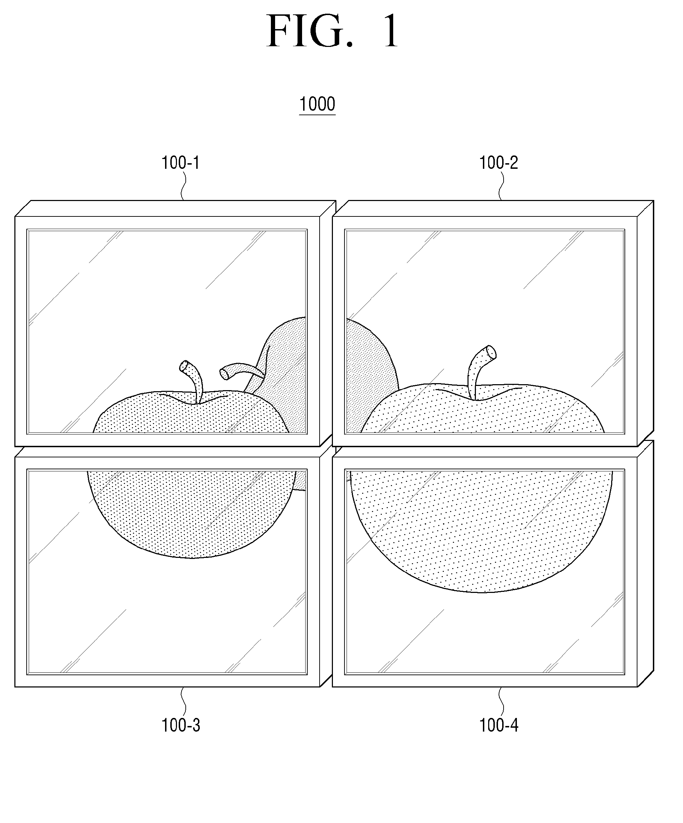

FIG. 1 is a diagram illustrating a display system 1000 configured of a plurality of display apparatuses according to an exemplary embodiment.

The display system 1000 may be configured of a plurality of display apparatuses, and the display apparatuses may simultaneously display the same image or may display different images which are combined to form one entire image.

FIG. 1 illustrates that four display apparatuses 100-1, 100-2, 100-3, and 100-4 simultaneously display one image for an apple.

The four display apparatuses 100-1, 100-2, 100-3, and 100-4 may receive partial images, which are to be reproduced therethrough, out of one entire image. That is, the display apparatuses 100-1 to 100-4 may receive the partial images divided from the one entire image and reproduce the received partial images.

The four display apparatuses 100-1 to 100-4 may analyze image information for the received images (that is, the partial images divided from the one image), and may output images by performing image-quality processing according to the analysis result.

However, the four display apparatuses 100-1 to 100-4 may perform the image-quality processing by analyzing only the image information for the images (that is, the partial images divided from the one image) received therethrough. Since the image-quality processing in the display apparatuses is changed, the entire image in which the four images are combined may have a problem with the sense of unity. It may be assumed that one image of the divided images is an image in which an object is fast moving and the remaining images are images in which an object has little movement as an example of the divided images having different characteristics from each other.

In the embodiment, the display apparatuses 100-1 to 100-4 may maintain the sense of unity in the entire image by synthesizing parameters for image-quality processing in the display apparatuses 100-1 to 100-4, calculating a screen change value using the synthesized parameters, and performing common image-quality processing using the calculated screen change value.

The second, third, and fourth display apparatuses 100-2 to 100-4 may calculate screen change parameters in which image information of partial images received therethrough is analyzed and transmit the calculated screen change parameters to the first display apparatus 100-1. The display apparatus 100-1 which receives the screen change parameters may calculate a screen change value using a screen change parameter, in which image information of a partial image received in the first display apparatus 100-1 is analyzed, and the screen change parameters of the partial images received from the other display apparatuses 100-2 to 100-4, and transmit the screen change value to the other display apparatuses 100-2 to 100-4.

The first display apparatus 100-1 which calculates the screen change value and transmits the screen change value to the display apparatuses 100-2 to 100-4 may refer to a master apparatus, and the display apparatuses 100-2 to 100-4 which receive images from the master apparatus and display the images may refer to slave apparatuses.

It has described that the four display apparatuses are used for clarity, but the number of display apparatuses constituting the display system 1000 is not limited thereto.

The display system may be implemented that all the four display apparatuses 100-1 to 100-4 are operated as slave apparatuses and a master apparatus is separately provided.

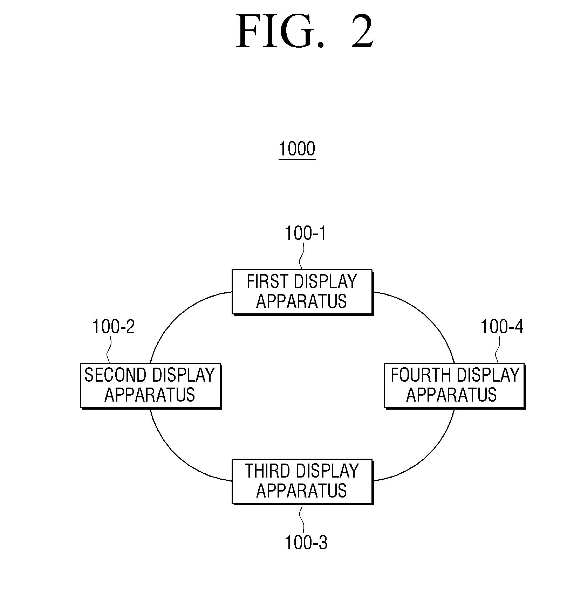

The display system 1000 according to an embodiment is conceptually illustrated in FIG. 2. Referring to FIG. 2, the first to fourth display apparatuses 100-1 to 100-4 are coupled to each other and may exchange a variety of pieces of information, commands, and pieces of content.

FIG. 2 illustrates that display apparatuses are directly coupled only to adjacent display apparatuses, but the coupling form of the display apparatuses is not limited thereto and may be variously changed according to various exemplary embodiments. For example, the second to fourth display apparatuses may be coupled only to the first display apparatus and may transmit and receive the screen change parameters and the screen change value to and from the first display apparatus.

As a coupling state illustrated in FIG. 2, in response to the first display apparatus 100-1 being indirectly coupled to the third display apparatus 100-3 and a screen change value being transmitted from the first display apparatus 100-1 to the third display apparatus 100-3, the display system may be operated in such a manner that the screen change value may be indirectly transmitted to the third display apparatus 100-3 through the second display apparatus 100-2.

Hereinafter, in description for a method of transmitting and receiving information for content, the indirect transmitting (receiving) method will be described similar to the direct transmitting (receiving) method. That is, even in response to content being indirectly transmitted from the first display apparatus 100-1 to the third display apparatus 100-3 through the second display apparatus 100-2, the description for the second display apparatus 100-2 will be omitted, and it will be described that the content may be transmitted from the first display apparatus 100-1 to the third display apparatus 100-3.

FIG. 2 has illustrated that the display apparatuses are coupled to each other through one line, the display apparatuses may be implemented to be coupled through two or more communication paths. The communication between the display apparatuses may be performed through a wired communication method other than a wireless communication method.

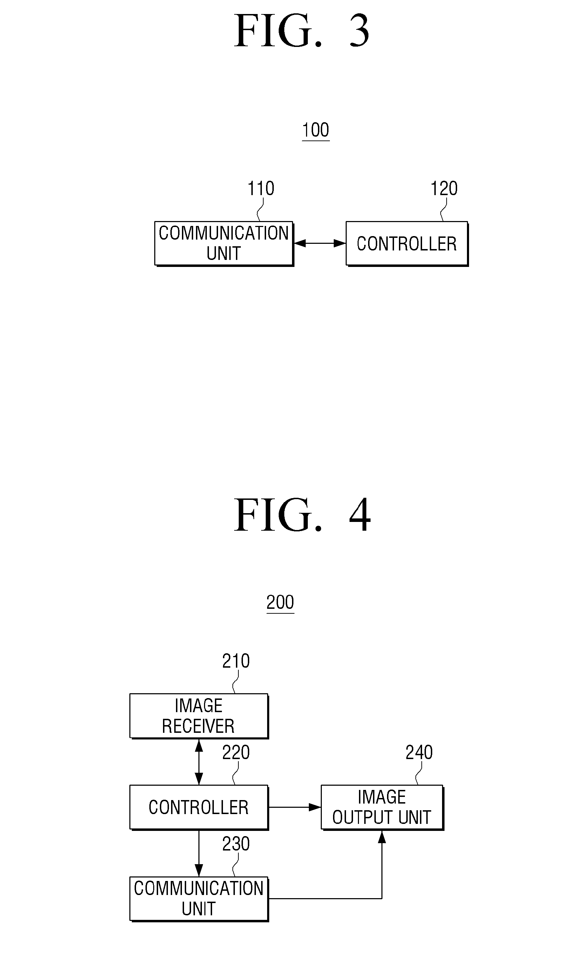

FIG. 3 is a block diagram illustrating a configuration of a display apparatus 100 operated as a master apparatus which constitutes a display system according to an exemplary embodiment.

Referring to FIG. 3, the display apparatus 100 may include a communication unit 110 and a controller 120.

The communication unit 110 may be configured to perform communication with an external apparatus, and may perform communication with other display apparatuses. For example, the display apparatus 100 may receive screen change parameters, in which image information of partial images divided from one image is analyzed, from the other display apparatuses.

For the united image-quality processing of a plurality of display apparatuses, the screen change value calculated using the received screen change parameters may be transmitted to one or more other display apparatuses through the communication unit 110.

The controller 120 may calculate the screen change value using the received screen change parameters for the united image-quality processing of the plurality of display apparatuses. For example, the controller 120 may calculate the screen change value through a method of selecting a minimum value or a maximum value among the screen change parameters or a method of calculating an average value of the screen change parameters. However, the method of calculating the screen change value is not limited thereto, and the screen change value may be calculated through various methods according to the user setup.

The screen change parameters may be received from the display apparatuses, and may be information acquired by analyzing the image information of the partial images received from the display apparatuses.

The image information may be screen change information according to change in a frame of the divided partial image, and may include at least one of motion information, fall back information, panning information, scroll information, and film information. The image information may be contrast information of the partial image received in each of the display apparatuses.

The controller 120 may control the communication unit 110 to transmit the calculated screen change value to the plurality of display apparatuses. For example, the controller 120 may transmit the screen change value calculated using the parameters received from the plurality of display apparatuses to the plurality of display apparatuses.

In this example, each of the display apparatuses may perform image-quality processing on the received image using the received screen change value and output an image-quality-processed image. That is, since the image-quality processing in the display apparatuses is performed according to a common value (screen change value), the image-quality processing in the display apparatuses may be equally performed. Accordingly, the sense of unity in an entire image in which the images output from the display apparatuses are combined may be entirely maintained.

FIG. 4 is a block diagram illustrating a configuration of a display apparatus 200 operated as a slave apparatus which constitutes a display system according to an embodiment.

Referring to FIG. 4, the display apparatus 200 as a slave apparatus may include an image receiver 210, a controller 220, a communication unit 230, and an image output unit 240.

The image receiver 210 may receive a partial image divided from one image. The image receiver 210 may transmit the received image to the controller 220. The partial image divided from the one image may refer to an image of an entire image, which is reproduced through one display apparatus, in a display system which displays one image through all a plurality of display apparatuses by dividing the one image and displaying the divided images through the plurality of display apparatuses.

The image receiver 210 may receive the divided partial image in an image signal form or an image data form.

The controller 220 may determine a screen change parameter by analyzing image information of the received partial image. The image information may be screen change information according to change in a frame of the divided partial image. The image information may include at least one of motion information, fall back information, panning information, scroll information, and film information. The image information may be contrast information of the partial image received in each of the display apparatuses.

The controller 220 may determine the screen change parameter by analyzing the image information. For example, the controller 220 may store an N-th frame of an input image in a storage unit (not shown), and store an N-1-th frame of the input image in the storage unit (not shown). The controller 220 may determine the screen change parameter by calculating change degree in the image based on two adjacent input frames.

The controller 220 may determine the screen change parameter by analyzing motion information. For example, the controller 220 may store the N-th frame of the input image in the storage unit (not shown), and store the N-1-th frame of the input image in the storage unit (not shown). The controller 220 may determine the screen change parameter by calculating degree and a direction of position change of an object in the screen.

The controller 220 may determine the screen change parameter by analyzing fall back information. The fall back may refer to a procedure which may not process a portion of an image difficult to be processed and may bypass the portion of the image difficult to be processed. The controller 220 may determine the screen change parameter by analyzing the fall back information based on the two adjacent frames of the input image.

The controller 220 may determine the screen change parameter by analyzing panning information or scroll information. The panning information or the scroll information may refer to information for degree in a movement of the entire image. The controller 220 may determine the screen change parameter by analyzing the panning information or the scroll information based on the two adjacent input frames.

The controller 220 may determine the screen change parameter by analyzing film information. The film information may refer to information indicating whether the input image is an image originally having a conventional frame rate of approximately 60 Hz or an image which is converted to a frame rate of approximately 60 Hz from a source having a frame rate of approximately 24 Hz once. An image such as a movie may be manufactured to have a frame rate of approximately 24 Hz. In response to the frame rate conversion of the movie image being collectively processed with the source having a general frame rate of approximately 60 Hz, screen interruption may be caused. Accordingly, the controller 220 may determine the screen change parameter by determining whether or not sum of absolute difference (SAD) has a large specific threshold based on the two adjacent input frames and determining whether or not the SAD value has a certain pattern.

The communication unit 230 may transmit the determined screen change parameter to a display apparatus operated as a master apparatus. In response to the screen change value being calculated using the received screen change parameter through the display apparatus operated as a master apparatus, the communication unit 230 may receive the screen change value from the display apparatus operated as the master apparatus.

The image output unit 240 may perform image-quality processing on the divided partial image using the received screen change value, and output an image-quality-processed image. For example, even in response to a screen change parameter calculated in a specific display apparatus being an "a" value, the image output unit 240 may perform the image-quality processing on the divided partial image in which the screen change value calculated in the master display apparatus is "a" by applying the screen change value "a", and output the image-quality-processed image.

The image output unit 240 may output the image by converting a frame rate of the divided partial image using the received screen change value. For example, the image output unit 240 may output the image by converting a frame rate of the divided partial image by generating an image having a second frame rate through addition of an interpolated frame generated using the received screen change value to a divided partial image received at the first frame rate.

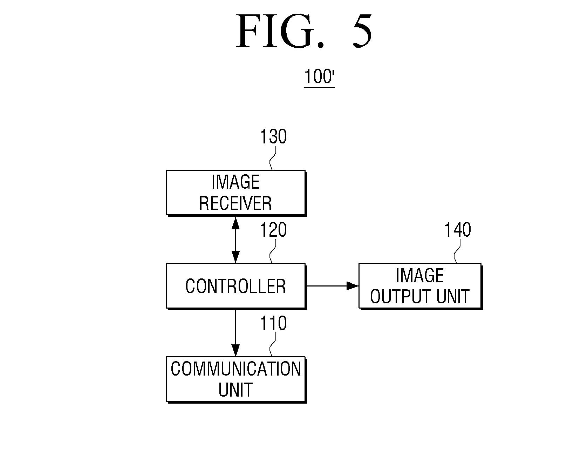

Hereinafter, any one display apparatus 100' among a plurality of display apparatuses constituting the display system 1000 will be described with reference to FIG. 5. The description for the display apparatus 100' which is to be made below may be applied to all display apparatuses constituting the display system.

FIG. 5 is a block diagram illustrating a configuration of a display apparatus according to another exemplary embodiment.

It has been described in FIG. 3 that the display apparatus 100 serving as a master apparatus includes the communication unit 110 and the controller 120. However, referring to FIG. 5, the display apparatus 100' may further include an image receiver 130 and an image output unit 140.

The image receiver 130 may receive a partial image divided from one image. The image receiver 130 may transmit the received image to the controller 120. The partial image divided from the one image may refer to an image of an entire image, which is reproduced through one display apparatus, in a display system which displays one image through all a plurality of display apparatuses by dividing the one image and displaying the divided images through the plurality of display apparatuses.

The image receiver 130 may receive the divided partial image in an image signal form or an image data form.

The controller 120 may determine a screen change parameter by analyzing image information of the received partial image. The image information may be screen change information according to change in a frame of the divided partial image. The image information may include at least one of motion information, fall back information, panning information, scroll information, and film information. The image information may be contrast information of the partial image received in each of the display apparatuses.

The controller 120 may calculate a screen change value using received screen change parameters and the screen change parameter calculated from the image received in the display apparatus 100' as a master apparatus for the united image-quality processing of the plurality of display apparatuses.

For example, differently from the exemplary embodiment of FIG. 3 that the screen change value may be calculated only using the screen change parameter received from the display apparatus 200 serving as a slave apparatus, the controller 120 may calculate the screen change value using the screen change parameter received from the display apparatus 200 serving as a slave apparatus together with the screen change parameter determined from the image information of the image received in the display apparatus 100'.

The image output unit 140 may perform image-quality processing on the received partial image using the screen change value to which the determined screen change parameter is reflected, and output an image-quality-processed image.

For example, the exemplary embodiment of FIG. 3 has described that the display apparatus 100 serving as a master apparatus may calculate the screen change value by receiving the screen change parameter and may transmit the calculated screen change value to the display apparatus 200 serving as a slave apparatus.

However, the image output unit 140 in the exemplary embodiment may perform image-quality processing on the image received in the display apparatus 100' by applying the screen change value calculated further using the screen change parameter for the image received in the display apparatus 100' together with the received screen change parameter, and output an image-quality-processed image.

The communication unit 110 may transmit the screen change value, which is calculated further using the screen change parameter for the image received in the display apparatus 100' together with the received screen change parameter, to the display apparatus 200 operated as a slave apparatus. The display apparatus 200 operated as a slave apparatus may perform image-quality processing on the received image using the screen change value which is calculated using the screen change parameter for the image received in the display apparatus 100' and screen change parameters for images received in a plurality of display apparatuses 200 serving as a slave apparatus.

The display apparatus 100' according to an exemplary embodiment illustrated in FIG. 5 may calculate the screen change value and transmit the screen change value to the display apparatus operated as a slave apparatus as well as may output the image by perform image-quality processing on the divided partial image.

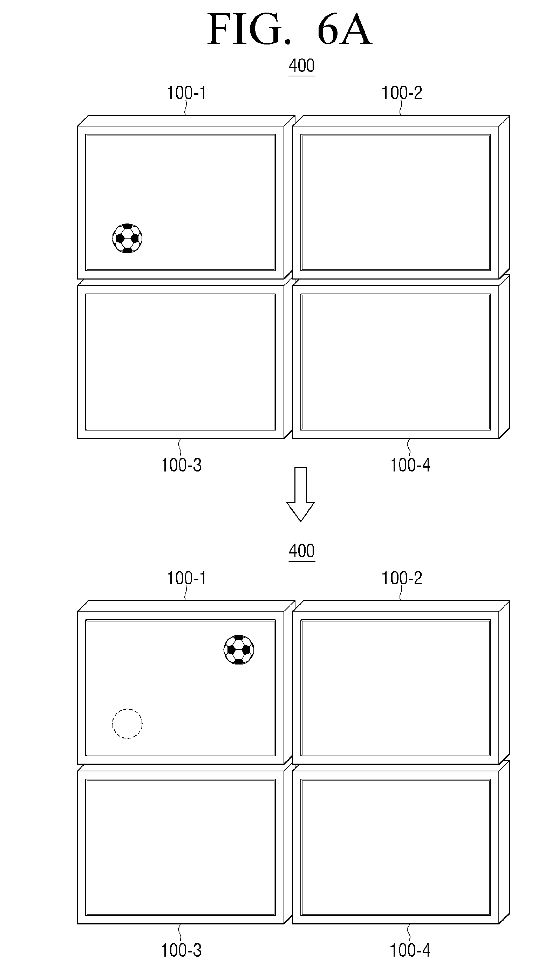

FIG. 6A is a diagram illustrating a process of determining a screen change parameter by analyzing motion information according to an exemplary embodiment.

Referring to FIG. 6A, the display system 1000 may be configured of a plurality of display apparatuses. The display apparatuses may display different images from each other and form one entire image through a combination of the different images.

Four display apparatuses 100-1 to 100-4 may receive partial images, which are to be reproduced in the display apparatuses 100-1, 100-2, 100-3, and 100-4, from the one entire image. That is, the display apparatuses 100-1, 100-2, 100-3, and 100-4 may receive the partial images divided from the one entire image and reproduce the partial images.

The four display apparatuses 100-1 to 100-4 may analyze image information for the received images (that is, the partial images divided from the one image), and may output images by performing image-quality processing according to the analysis result.

However, the four display apparatuses 100-1 to 100-4 may perform the image-quality processing by analyzing only the image information for the images (that is, the partial images divided from the one image) received therethrough.

For example, the display apparatus 100-1 may calculate a screen change parameter by extracting a moving direction and size of an object (a soccer ball) in a screen through comparison of adjacent two frames of an input image.

No movement may exist in other display apparatuses 100-2 to 100-4, and thus the other display apparatuses 100-2 to 100-4 calculate screen change parameters having information that no movement of the object exists in the screen.

In this example, in response to the image-quality processing being performed by analyzing only motion information for received images through the display apparatuses 100-1 to 100-4, the display apparatus 100-1 may output an image by performing image-quality processing for smoothing the movement of the soccer ball. However, the other display apparatuses 100-2 to 100-4 may not perform any image-quality processing, and thus the sense of unity may be lack between the images finally output from the display apparatus 100-1 and the other display apparatuses 100-2 to 100-4.

Accordingly, in response to the screen change parameters in which the image information of the received images is analyzed being transmitted from the display apparatuses 100-1 to 100-4 to the display apparatus 100-1, the display apparatus 100-1 may calculate the screen change value using the parameters.

The screen change value may be calculated through various methods. For example, the screen change value may be a maximum value or a minimum value among the screen change parameters received from the plurality of display apparatuses 100-1 to 100-4 or an average value of the screen change parameters received from the plurality of display apparatuses 100-1 to 100-4. In another example, the screen change value may be calculated through various methods according to the user setup.

An example of calculating a screen change value using a parameter determined according to fall back information will be described. The screen change value may be determined by selecting the maximum value among the parameters received from the plurality of display apparatuses 100-1 to 100-4. That is, the screen change value may be calculated by selecting a parameter value having the largest degree that a portion of an image difficult to be processed may not be processed but may be bypassed. The plurality of display apparatuses 100-1 to 100-4 may perform image-quality processing on the received images using the calculated screen change value (the parameter value having the largest fall back amount) and output image-quality-processed images, and thus the sense of unity in the entire image may be maintained.

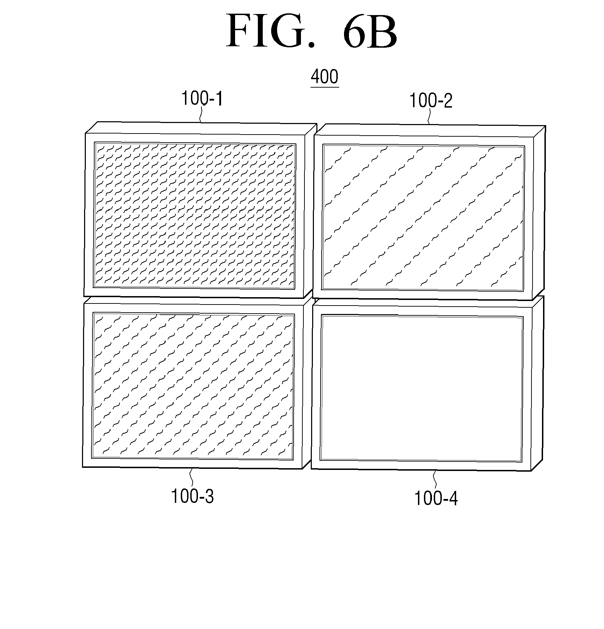

FIG. 6B is a diagram illustrating a process of determining a screen change parameter by analyzing panning information according to an exemplary embodiment.

Referring to FIG. 6B, it may be seen that the plurality of display apparatuses 100-1 to 100-4 have different panning degrees from each other. The plurality of display apparatuses 100-1 to 100-4 may calculate different screen change parameters according to different panning information.

In response to the image-quality processing being performed by analyzing only panning information for images received therethrough in the display apparatuses 100-1 to 100-4, the sense of unity may be lack in the images finally output from the plurality of display apparatuses 100-1 to 100-4.

Accordingly, in response to the screen change parameters in which the image information of the received images is analyzed being transmitted from the display apparatuses 100-1 to 100-4 to the display apparatus 100-1, the display apparatus 100-1 may calculate the screen change value using the parameters.

For example, the screen change value may be calculated through a method of adding all the parameters received from the plurality of display apparatuses 100-1 to 100-4 and calculating an average value by dividing the added parameter value by the number of display apparatuses (4 in the exemplary embodiment). However, the method of calculating the screen change value is not limited thereto, and the screen change value may be variously calculated according to a method set by the user.

The plurality of display apparatuses 100-1 to 100-4 may perform image-quality processing on the received images using the calculated screen change value (the average value of the parameters) and output image-quality-processed images, and thus the sense of unity in the entire image may be maintained.

In another example, the plurality of display apparatuses 100-1 to 100-4 may determine screen change parameters using scroll information and film information of the received images, calculate the screen change value using the screen change parameters, and commonly perform image-quality processing by applying the calculated screen change value, and thus the sense of unity in the entire image may be maintained

In another example, the plurality of display apparatuses 100-1 to 100-4 may determine average brightness of the received images, and transmit the determined average brightness of the images to the display apparatus 100-1 serving as a master apparatus. In this example, the display apparatus 100-1 serving as a master apparatus may calculate brightness of an entire screen using the average brightness of the image in each of the plurality of display apparatuses 100-1 to 100-4, and transmit the calculated brightness of the entire screen to the display apparatuses 100-2 to 100-4 serving as a slave apparatus. The plurality of display apparatuses 100-1 to 100-4 may output images by applying the brightness of the entire screen to the images.

The exemplary embodiment has described that the plurality of display apparatuses 100-1 to 100-4 may output the images by calculating the screen change value through synthesis of one kind of parameters, for example, parameters in which motion information is analyzed, and applying the screen change value, but this is not limited thereto. That is, the above-described processes on various kinds of parameters may be simultaneously performed.

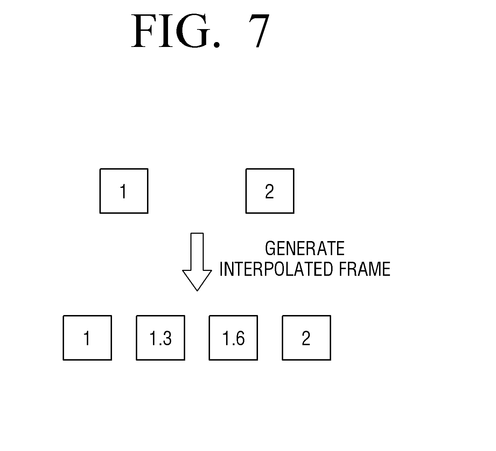

FIG. 7 is a diagram illustrating a method of outputting an image by converting a frame rate of a divided partial image using a screen change value according to an exemplary embodiment.

The image output unit 240 may convert a frame rate of the input image. That is, the image output unit 240 may convert an image having a first frame rate to an image having a second frame rate. For example, the image output unit 240 may output the image by converting an input image having a frame rate of approximately 60 Hz to an image having a frame rate of approximately 120 Hz or 240 Hz.

According to the exemplary embodiment, the image output unit 240 may convert the frame rate of the input image to the second frame rate by generating an interpolated frame with respect to the input image having the first frame.

FIG. 7 illustrates that interpolated frames "1.3" and "1.6" are generated using image information extracted based on a frame "1" and a frame "2". "1.3" and "1.6" in the generated two interpolated frames of FIG. 7 mean that a position of an object in the frame is an intermediate position between a position in the frame "1" and a position the frame "2". The frames "1.3" may refer to an interpolated frame similar to the frame "1" and the frame "1.6" may refer to an interpolated frame similar to the frame "2".

The interpolated frame may be generated by applying the screen change value calculated in the display apparatus 100-1 serving as a master apparatus. That is, the plurality of display apparatuses 100-1 to 100-4 may generate interpolated frames by applying the screen change value calculated in the master apparatus. The plurality of display apparatuses 100-1 to 100-4 may collectively perform frame rate conversion to maintain the sense of unit in the entire screen.

The exemplary embodiment has described to perform the image-quality processing by generating the interpolated frame, but the image-quality processing may be performed through a method of generating a repeated frame according to the kind of parameter or a setting value of the user.

The exemplary embodiment has described to perform the image-quality processing through frame rate conversion, but this is not limited thereto.

For example, the display apparatus 100-1 serving as a master apparatus may calculate brightness of an entire screen by synthesizing the average brightness of the images received in the plurality of display apparatuses 100-1 to 100-4. In this example, the plurality of display apparatuses 100-1 to 100-4 may be implemented to output the images by controlling the brightness of the received images therethrough using the brightness of the entire screen calculated in the display apparatus 100-1.

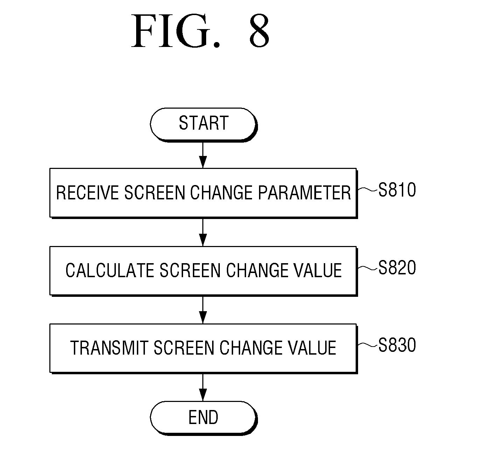

FIG. 8 is a flowchart illustrating a display method of a display apparatus operated as a master apparatus according to an exemplary embodiment.

Referring to FIG. 8, first, the display apparatus may receive screen change parameters in which image information of partial images divided from one image is analyzed from one or more other display apparatuses (S810). The image information may refer to screen change information according to change in frames of the divided partial images.

The display apparatus may calculate a screen change value using the received screen change parameters (S820).

For example, the controller 120 may calculate the screen change value through a method of selecting a minimum value or a maximum value among the screen change parameters or a method of calculating an average value of the received screen change parameters. However, the method of calculating the screen change value is not limited thereto, and the screen change value may be calculated through various methods according to the user setup.

The screen change parameters may be received from the display apparatuses and may be information acquired by analyzing the image information of the partial images received in the display apparatuses.

The image information may be screen change information according to change in a frame of the divided partial image, and may include at least one of motion information, fall back information, panning information, scroll information, and film information. The image information may be contrast information of the partial image received in each of the display apparatuses.

The display apparatus may transmit the calculated screen change value to the one or more other display apparatuses (S830).

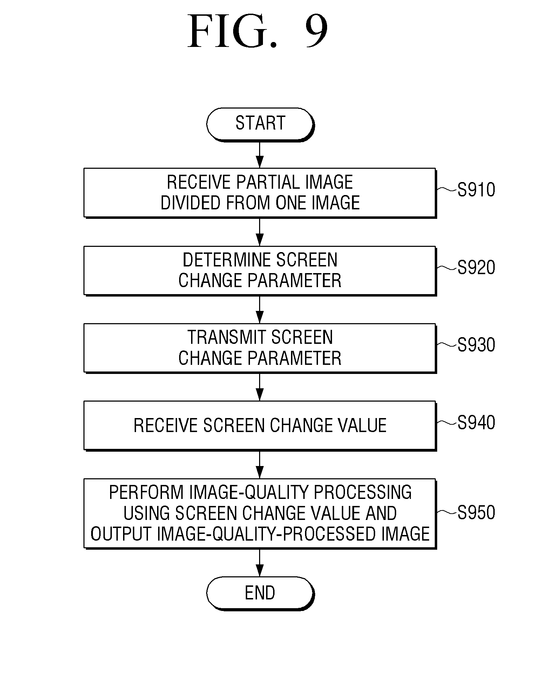

FIG. 9 is a flowchart illustrating a display method of a display apparatus serving as a slave apparatus according to an exemplary embodiment.

Referring to FIG. 9, first, the display apparatus may receive a partial image divided from one image (S910).

The display apparatus may determine a screen change parameter by analyzing image information of the received partial image (S920). The image information may be screen change information according to change in a frame of the divided partial image, and may include at least one of motion information, fall back information, panning information, scroll information, and film information. The image information may be contrast information of the partial image received in each of display apparatuses.

The display apparatus may transmit the determined screen change parameter to other display apparatus (S930).

The display apparatus may receive a screen change value from the other display apparatus (S940). For example, in response to the screen change value being calculated using the received screen change parameter through a display apparatus operated as a master apparatus, the display apparatus may receive the calculated screen change value.

The display apparatus may perform image-quality processing on the divided partial image using the received screen change value and output an image-quality-processed image (S950). For example, even in response to a screen change parameter calculated in a specific display apparatus being an "a" value, the image output unit 240 may perform the image-quality processing on the divided partial image in which the screen change value calculated in the master display apparatus is "a" by applying the screen change value "a", and output the image-quality-processed image.

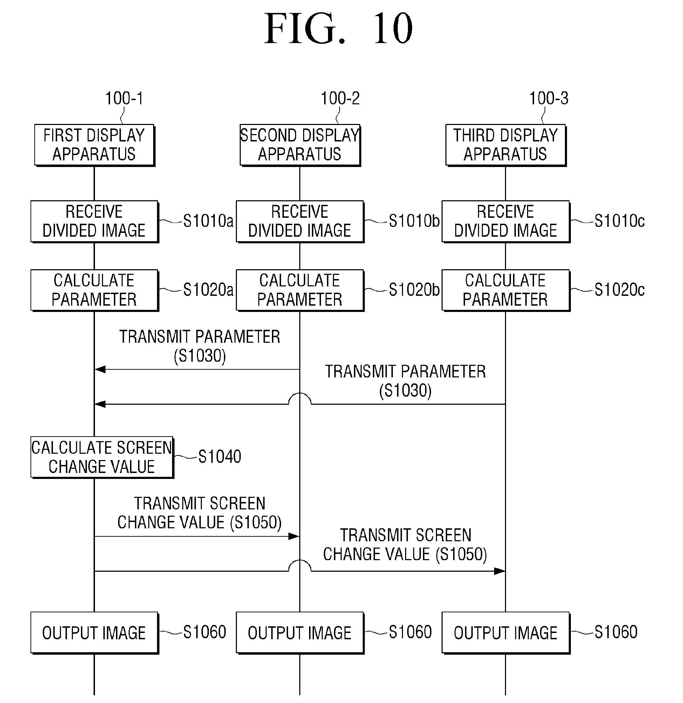

FIG. 10 is a sequence diagram illustrating a content display method of a display apparatus which constitutes a display system according to an exemplary embodiment.

Referring to FIG. 10, the display system may be configured of first, second and third display apparatuses 100-1, 100-2, and 100-3. However, the number of display apparatuses is not limited thereto.

First, the first to third display apparatuses 100-1 to 100-3 may receive partial images divided from one image (S1010a, S1010b, and S1010c).

The first to third display apparatuses 100-1 to 100-3 may determine screen change parameters analyzing image information of the received partial images (S1020a, S1020b, and S1020c).

The second display apparatus 100-2 and the third display apparatus 100-3 may transmit the screen change parameters to the first display apparatus 100-1 (S1030).

For the united image-quality processing in the first to third display apparatuses 100-1 to 100-3, the first display apparatus 100-1 may calculate a screen change value using the screen change parameters received from the second and third display apparatuses 100-2 and 100-3 and the screen change parameter determined in the first display apparatus 100-1 (S1040).

The first display apparatus 100-1 may transmit the calculated screen change value to the second and third display apparatuses 100-2 and 100-3 (S1050).

The first to third display apparatuses 100-1 to 100-3 may perform image-quality processing on the divided partial images using the screen change value, and output image-quality-processed images (S1060).

The display methods of a display apparatus which constitutes a display system configured of a plurality of display apparatuses according to various exemplary embodiments may be stored in a non-transitory readable medium. The non-transitory readable medium may be mounted with various apparatuses and used.

The non-transitory computer-recordable medium is not a medium configured to temporarily store data such as a register, a cache, or a memory but an apparatus-readable medium configured to permanently or semi-permanently store data. For example, the programs for executing the above-described various methods may be stored in the non-transitory apparatus-readable medium such as a compact disc (CD), a digital versatile disc (DVD), a hard disc, a Blu-ray disc, a universal serial bus (USB), a memory card, or a read only memory (ROM) and provided.

The above-described programs may be installed in existing display apparatuses and thus a display system configured of display apparatuses capable of simultaneously performing a function of a master apparatus and a function of a slave apparatus may be implemented.

The foregoing exemplary embodiments and advantages are merely exemplary and are not to be construed as limiting the present disclosure. The present teaching may be readily applied to other types of apparatuses. Also, the description of the exemplary embodiments of the present disclosure is intended to be illustrative, and not to limit the scope of the claims, and many alternatives, modifications, and variations will be apparent to those skilled in the art.

## Claims

1. A display apparatus which constitutes a display system configured of a plurality of display apparatuses, the display apparatus comprising:
a communication unit to receive screen change parameters, in which image information of partial images divided from one image is analyzed, from one or more other display apparatuses; and
a controller to determine a screen change value using the received screen change parameters and control the communication unit to transmit the determined screen change value to the one or more other display apparatuses,
wherein the image information is screen change information according to change in frames of the divided partial images.

2. The display apparatus as claimed in claim 1, further comprising:
an image receiver to receive a partial image divided from the one image; and
an image output unit to perform image-quality processing on the received partial image and output an image-quality-processed image,
wherein the controller determines a screen change parameter of the display apparatus by analyzing image information of the received partial image and determines the screen change value using the received screen change parameters and the determined screen change parameter, and
the image output unit performs the image-quality processing on the received partial image using the screen change value to which the determined screen change parameter is reflected.

3. The display apparatus as claimed in claim 1, wherein the screen change information includes at least one of motion information, fall back information, panning information, scroll information, and film information.

4. The display apparatus as claimed in claim 1, wherein the screen change value includes at least one of a maximum value and a minimum value among the received screen change parameters, and an average value of the received screen change parameters.

5. A display apparatus which constitutes a display system configured of a plurality of display apparatuses, the display apparatus comprising:
an image receiver to receive a partial image divided from one image;
a controller to determine a screen change parameter by analyzing image information of the received partial image;
a communication unit to transmit the determined screen change parameter to other display apparatus and receive a screen change value from the other display apparatus; and
an image output unit to perform image-quality processing on the divided partial image using the received screen change value and output an image-quality-processed image,
wherein the image information is screen change information according to change in a frame of the divided partial image.

6. The display apparatus as claimed in claim 5, wherein the screen change information includes at least one of motion information, fall back information, panning information, scroll information, and film information.

7. The display apparatus as claimed in claim 5, wherein the image output unit outputs the image by converting a frame rate of the divided partial image using the received screen change value.

8. A display method of a display apparatus which constitutes a display system configured of a plurality of display apparatuses, the method comprising:
receiving screen change parameters in which image information of partial images divided from one image is analyzed from one or more other display apparatuses;
determining a screen change value using the received screen change parameters; and
transmitting the determined screen change value to the one or more other display apparatuses,
wherein the image information is screen change information according to change in frames of the divided partial images.

9. The method as claimed in claim 8, further comprising:
receiving a partial image divided from the one image;
determining a screen change parameter by analyzing image information of the received partial image; and
performing image-quality processing on the received partial image and outputting an image-quality-processed image,
wherein the calculating of the screen change value includes calculating the screen change value using the received screen change parameters and the determined screen change parameter, and
the outputting includes performing the image-quality processing on the received partial image using the screen change value to which the determined screen change parameter is reflected.

10. The method as claimed in claim 8, wherein the screen change information includes at least one of motion information, fall back information, panning information, scroll information, and film information.

11. The method as claimed in claim 8, wherein the screen change value includes at least one of a maximum value and a minimum value among the received screen change parameters, and an average value of the received screen change parameters.

12. A display method of a display apparatus which constitutes a display system configured of a plurality of display apparatuses, the method comprising:
receiving a partial image divided from one image;
determining a screen change parameter by analyzing image information of the received partial image;
transmitting the determined screen change parameter to other display apparatus and receiving a screen change value from the other display apparatus; and
performing image-quality processing on the divided partial image using the received screen change value and output an image-quality-processed image,
wherein the image information is screen change information according to change in a frame of the divided partial image.

13. The method as claimed in claim 12, wherein the screen change information includes at least one of motion information, fall back information, panning information, scroll information, and film information.

14. The method as claimed in claim 12, wherein the outputting includes outputting the image by converting a frame rate of the divided partial image using the received screen change value.

15. The display apparatus as claimed in claim 1, the controller determines the screen change parameter by analyzing the screen change information includes at least one of motion information, fall back information, panning information, scroll information, and film information based on two adjacent frames of the received partial image.
